# EUROPÄISCHE PATENTSCHRIFT

(11) **EP 0 805 167 B1**
(45) Veröffentlichungstag und Bekanntmachung des Hinweises auf die Patenterteilung: **13.11.2002**
(21) Anmeldenummer: 97107020.6
(22) Anmeldetag: 28.04.1997
(51) Int. Cl.: C08F 8/28

(54) **Verfahren zur Herstellung von Polyvinylacetalen und -ketalen**
Process for the preparation of polyvinyl acetals and ketals
Procédé de préparation d'acétals et cétals polyvinyliques

(30) Priorität: 04.05.1996 DE 19617893
(43) Veröffentlichungstag der Anmeldung: 05.11.1997
(73) Patentinhaber: Kuraray Specialities Europe GmbH, 65926 Frankfurt am Main (DE)
(72) Erfinder: Fuss, Robert, W., Dr., 65779 Kelkheim (DE); Gutweiler, Matthias, Dr., 65239 Taunusstein (DE); Baumgartner, Martin, Dr., 65760 Eschborn (DE)
(74) Vertreter: Luderschmidt, Schüler & Partner GbR

(56) Entgegenhaltungen:
- EP-A- 0 532 489
- WO-A-95/12625
- DD-A- 216 028
- DE-A- 3 246 605
- DE-C- 891 745
- GB-A- 1 447 520
- Brockhaus -Enzyklopädie, Mannheim, Brockhaus, 19. Auflage, Bd. 7, 1988, S. 350, (Stichwort "Fläche")

## Beschreibung

Die vorliegende Erfindung betrifft ein Verfahren zur Herstellung von Polyvinylacetalen und -ketalen durch heterogene Katalyse.

Die Herstellung von Polyvinylacetalen erfolgt gewöhnlich durch homogen-säurekatalysierte Kondensation von Polyvinylalkohol und Aldehyd in wäßrigen Medien. Aldehyde mit bis zu vier Kohlenstoffatomen sind begrenzt mit Wasser mischbar, so daß deren Reaktionen nicht an Phasengrenzflächen gebunden sind.

Als katalytisch wirkende Säure kommen häufig Salzsäure, Schwefelsäure, Salpetersäure oder p-Toluolsulfonsäure zum Einsatz. Obwohl die eingesetzte Säure nicht verbraucht wird und daher in katalytischen Mengen eingesetzt werden könnte, wird in der Praxis eine stöchiometrische und sogar teilweise eine überstöchiometrische Menge benötigt, weil das sich bildende Produkt die Säure in seinen im Reaktionsmedium unlöslichen Körnchen einschließt und sie der weiteren Reaktion entzieht. Derartige Verfahren sind beispielsweise beschrieben in DE-B 23 65 005, DE-B 12 47 663 und DE-C 891 745.

Nachteilig bei diesen Verfahren ist auch die Tatsache, daß die eingesetzte Säure nach beendeter Reaktion entfernt bzw. neutralisiert werden muß. Die gebildeten Acetale sind in saurem Medium nicht hinreichend stabil (siehe auch Houben-Weyl, Georg Thieme Verlag, Stuttgart, Methoden der organischen Chemie, 4. Auflage, Band E 14a/1, 1991). Daher werden die erhaltenen Produkte, die gewöhnlich aus dem Reaktionsmedium ausfallen, durch Sieben, Zentrifugieren oder anderen geeigneten Verfahrensschritten isoliert und anschließend durch mehrfach wiederholte Waschschritte von Säureresten befreit. Da die angefallenen körnigen Produkte jedoch auch im Korn noch Säurereste beinhalten, ist sogar eine anschließende Neutralisation bzw. Alkalisierung üblich (US-A 258 410), um die Produkte im Alkalischen zu stabilisieren.

Ökologisch und ökonomisch bereitet dieses Verfahren Probleme, da die anfallenden Säure- und Salzmengen durch geeignete Aufarbeitungen des Waschwassers beseitigt werden müssen. Je nach Verfahren sind die eingesetzten Säuremengen verschieden, jedoch handelt es sich stets um große Volumina, die aufbereitet werden müssen. Hinzu kommen die Salze, die durch die Neutralisation entstehen, sowie die Alkalien, die beim Alkalisieren und nachgeschalteten Waschprozessen anfallen.

Des weiteren bedingen diese Verfahren den Einsatz von äußerst hochwertigen und kostenintensiven Reaktormaterialien. Besonders bewährt hat sich hier ein Material aus Hasteloy-Legierungen, das eine hohe Korrosionsbeständigkeit aufweist. Die Errichtung einer solchen Anlage ist sowohl kapitalintensiv als auch im Unterhalt durch hohe Betriebskosten gekennzeichnet.

Ein weiterer Nachteil besteht in der anzuwendenden Betriebsweise, die diskontinuierlich, in Form von batch-Ansätzen ist. Diese Arbeitsweise ist personalintensiv und bedingt eine relativ geringe Raum-Zeit-Ausbeute (= Anlagenauslastung).

Eine weitere beispielsweise in US-A 2 496 480 beschriebene Verfahrensvariante geht von einer alkoholischen Polyvinylalkohol-Suspension aus, die acetalisiert wird. Die resultierende Produktlösung ist im Gegensatz zur zuvor beschriebenen Variante homogen, so daß unlösliche Anteile leicht entfernt werden können. Die dazu eingesetzten Säuren sind ebenfalls im Lösemittel gelöst. Der Hauptnachteil dieser Variante ist neben den beschriebenen Korrosionsproblemen die Schwierigkeit der Produktausfällung und die erforderliche teure Lösemittelaufarbeitung.

Weitere Verfahren verwenden lonenaustauscherharze in der H⁺-Form (JP-B 17064-64) beziehungsweise teilweise durch Alkaliionen blockierte lonenaustauscherharze (DD-A 216 028) als Katalysatoren für Acetalisierungsreaktionen an Polyvinylalkohol. Die Nachteile dieser Verfahren liegen in der Trennung von Produkt und lonenaustauscher, die beide in der Festphase vorliegen, wenn der Polyvinylalkohol bis zur gewünschten, weitestgehend vollständigen Acetalisierung umgesetzt worden ist. Wird die Acetalisierung beispielsweise in einem mit lonenaustauscher gefüllten Rohr durchgeführt, kommt es durch ausfallendes Produkt zur gänzlichen Verstopfung der Apparatur und dadurch zum Reaktionsstillstand.

Aufgabe der vorliegenden Erfindung war daher, ein Verfahren zur Herstellung von Polyvinylacetalen und -ketalen zu entwickeln, das kontinuierlich betrieben werden kann und den Zwangsanfall von Abfallsäure vermeidet sowie den Einsatz von billigeren, korrosionsbeständigen Reaktormaterialien ermöglicht.

Die Aufgabe wird dadurch gelöst, daß die zur Kondensation der Edukte als Katalysator nötige Säure auf einem geeigneten Trägermaterial fixiert wird (geträgerte Säure).

Gegenstand der Erfindung ist also ein Verfahren zur Herstellung von Polyvinylacetalen oder -ketalen durch Umsetzung von Polyvinylalkohol mit einem Aldehyd oder Keton in Gegenwart eines Katalysators, der Säuregruppen enthält, die auf einem im Reaktionsmedium unlöslichen im Patentanspruch 1 definerten flächigen Träger chemisch gebunden sind. Geeignete Träger können aus organischem oder anorganischem Material bestehen, das die Säuregruppen gegebenenfalls über Spacer gebunden enthält.

Als geträgerte Säuren lassen sich beispielsweise freie Säuregruppen tragende Polymerfolien, insbesondere Membranen einsetzen. Die mit Säuregruppen modifizierten Polymerfolien müssen unter den Reaktionsbedingungen stabil sein. Die Polymerfolien können jede Art von Säuregruppen tragen, beispielsweise Sulfonsäure-, Phosphonsäure- und/oder Carboxygruppen.

Im Sinne dieser Erfindung werden bevorzugt Kationenaustauschmembranen eingesetzt, die -SO₃H, COOH, -PO₃H₂, -PO₃H⁻, bevorzugt Sulfonsäuregruppen, tragen. Materialien dieser Art sind kommerziell erhältlich und bedürfen keiner weiteren Modifikation. Die besonders bevorzugten Membranen sind als elektrisch geladene Barrieren bekannt oder auch als lonenaustauscher-Membranen. Die Eigenschaften und Herstellung solcher Membranen sind im Zusammenhang mit ihrem Einsatz als lonenaustauscher-Membranen ausführlich beschrieben worden.

Weiterhin zeichnen sich die eingesetzten Membranen durch gute mechanische Stabilität sowie durch Formstabilität aus, insbesondere durch geringe Quell- oder Schrumpfneigung im Reaktionsmedium. Die chemische Stabilität sollte sich über den Bereich von pH 1 bis 14 erstrecken, besonders jedoch im sauren und neutralen pH-Bereich gegeben sein.

Als organische Polymermatrix für die Membranen werden hydrophobe Polymere wie Polystyrol, Polyethylen oder Polysulfone genutzt, die gegebenenfalls auch vernetzt sein können. Diese werden dann beispielsweise sulfoniert und sind als sulfonierte Polystyrol-Divinylbenzol-Membranen, sulfonierte Polysulfone, Polyacrylonitrilmethallylsulfonat-Copolymer Membrane kommerziell erhältlich.

Des weiteren sind Membranen vom Typ ®NAFION (DuPont) oder ®Flemion (Asahi Glass) geeignet. Dabei handelt es sich um perfluorierte Membranen, die aus Tetrafluorethylen und einem Sulfonsäure- und/oder Carboxygruppen-haltigen Monomeren hergestellt wurden. Eingesetzt werden diese Membranen vorzugsweise in ihrer H⁺-Form, in der sie kommerziell erhältlich sind.

Als flächige Träger für Säuregruppen sind auch verschiedenartige anorganische Membranen, beispielsweise auf Basis von Zeolithen und Bentoniten verfügbar. Derartige Träger sind beispielsweise in F. Helfferich, lon-Exchange, McGraw-Hill, London, 1962, beschrieben.

Als geträgerte Säuren können auch flächige Gebilde aus Glas eingesetzt werden, auf die Säuregruppen tragende Reste chemisch fixiert worden sind. Derartige Gläser sind beispielsweise in K. Tanabe, Solid Acids and Bases, Academic Press, New York - London, 1970, S. 45 ff., beschrieben. Derartige Gläser sind beispielsweise unter dem Handelsnamen ®Deloxan (Degussa) erhältlich.

Zur Acetalisierung von Polyvinylalkohol werden vorzugsweise (C₁-C₄)-Aldehyde eingesetzt. Gewöhnlich überschreiten die eingesetzten Aldehyde die Kettenlänge von zehn Kohlenstoffatomen nicht. Insbesondere geeignet ist n-Butyraldehyd. Die Ketalisierung erfolgt vorzugsweise mit (C₃-C₁₀)-Ketonen, insbesondere Aceton und Cyclohexanon.

Als Polyvinylalkohole werden sowohl teil- als auch vollverseifte Typen, vorzugsweise mit einem Hydrolysegrad von 60 bis 100 Mol-%, sowie copolymere Polyvinylalkohole, beispielsweise mit Sulfonsäure- und/oder Carboxylgruppen-haltigen Monomeren hergestellte Polyvinylalkohole, eingesetzt. Prinzipiell ist jeder unmodifizierte und modifizierte Polyvinylalkohol einsetzbar. Die Polymerisationsgrade der benutzten Polyvinylalkohole reichen vorzugsweise von 100 bis 6000, insbesondere von 150 bis 500.

Bei der Herstellung der Polyvinylacetale oder -ketale können auch übliche Emulgatoren und Oxidationsstabilisatoren eingesetzt werden.

Durch die erfindungsgemäße Verfahrensweise kann das anfallende Polyvinylacetal oder -ketal, das in Wasser unlöslich ist, einfach aus dem Reaktionsmedium entfernt werden und braucht nicht von Säureanteilen befreit zu werden. Die Säure verbleibt auf dem Träger und kann, da sie katalytisch wirkt und nicht verbraucht wird, für weitere Reaktionen genutzt werden.

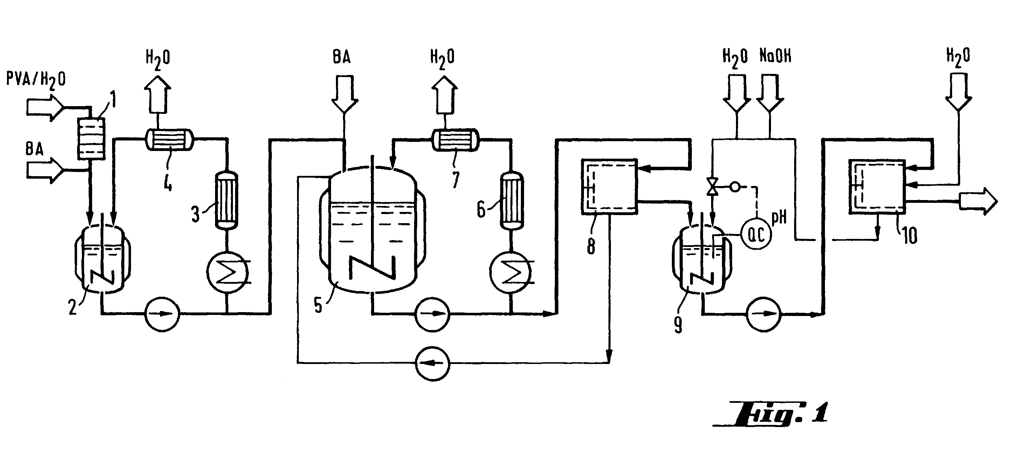

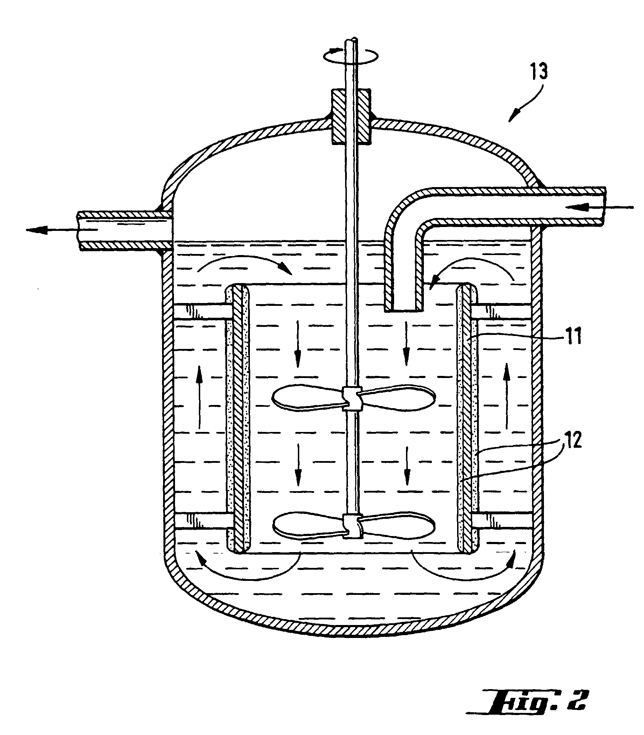

Ein bevorzugtes kontinuierliches Verfahren zur Herstellung von Polyvinylacetal verwendet mindestens zwei Reaktionsstufen (Vorreaktor und Hauptreaktor) sowie nachgeschaltete Aufarbeitungsstufen. Der schematische Herstellungsprozeß ist beispielsweise in Abbildung 1 dargestellt. Die Reaktoren **3** und **6** sind vorzugsweise kontinuierlich betriebene Rührkessel oder Rohrreaktoren. Die Reaktion findet an den reaktiven Zentren eines geeigneten Säuregruppen tragenden flächigen Trägers statt. Die reaktive Oberfläche des Trägers kann sich im Reaktor selbst oder in einem Umpump-Kreislauf befinden. In den Reaktoren kann der Rührer beispielsweise von einem Leitrohr **11** umgeben sein, auf dessen Oberfläche sich der reaktive Säuregruppen enthaltende flächige Träger **12** befindet (Abbildung Nr. 2). Im Umpump kann beispielsweise ein Membran-Hohlfasermodul oder ein Rohrbündelreaktor, auf dessen Rohren eine lonenaustauschermembran fixiert ist, installiert sein.

In den Vorreaktor werden die gegebenenfalls gekühlten Edukte kontinuierlich dosiert und mittels geeignetem Rührer vermischt. Vor der Einspeisung in den Vorreaktor wird die Polyvinylalkohol-Lösung vorzugsweise mittels eines lonenaustauschers von Kationen befreit. Durch geeignete Bedingungen, beispielsweise durch Umpump, wird sichergestellt, daß der Säuregruppen enthaltende Träger ständig angeströmt wird und das entstehende Teilprodukt nicht an der Trägeroberfläche anhaften kann und abtransportiert wird. Die Reaktorgröße richtet sich nach der gewünschten mittleren Verweilzeit. Überschüssiges Wasser, beispielsweise aus der Kondensationsreaktion, kann im Reaktor selbst oder im Umpump, beispielsweise durch ein Membranmodul oder eine sonstige geeignete Apparatur, abgetrennt werden. Dadurch wird gewährleistet, daß die Konzentration im Reaktor zeitlich konstant bleibt und die Reaktion stets unter optimalen Bedingungen erfolgen kann. Die Reaktion kann entweder über Mantelkühlung oder einen ebenfalls im Umpump installierten Wärmetauscher bei konstanter Temperatur durchgeführt werden.

Die Reaktion im Vorreaktor findet vorzugsweise bei einer Temperatur von 1 ° C bis 70 ° C, insbesondere bei 1 ° C bis 25 °C, besonders bevorzugt bei 1 °C bis 15 °C statt. Die mittlere Verweilzeit τ im Vorreaktor beträgt vorzugsweise 10 bis 120 Minuten, insbesondere 20 bis 40 Minuten. Die Reaktion kann bei Umgebungsdruck durchgeführt werden. Die teilweise Umsetzung von Polyvinylalkohol und Aldehyd führt zunächst zu einem teilacetalisierten Produkt. Bei fortschreitendem Umsatz (= Acetalisierungsgrad) fällt dieses teilacetalisierte Produkt aus der Lösung aus. Das Reaktionsgemisch wird dann in Form einer Lösung oder Suspension in den zweiten Reaktor überführt.

Im Hauptreaktor wird die Umsetzung bis zum gewünschten Acetalisierungsgrad fortgesetzt. Dies geschieht ebenfalls an einer Säuregruppen enthaltenden Trägeroberfläche. Wie im Vorreaktor kann diese entweder im Kessel selbst oder im Umpump installiert sein. Bei Bedarf kann auch im Hauptreaktor selbst oder in dessen Umpump eine Wasserabtrennung, beispielsweise durch ein Membranmodul, oder durch eine sonstige geeignete Apparatur erfolgen. In den Hauptreaktor wird gegebeenfalls Aldehyd nachdosiert, um den gewünschten Acetalisierungsgrad zu erzielen. Die Temperierung erfolgt auch hier über den Kesselmantel oder einen im Umpump liegenden Wärmetauscher. Die Temperatur im Hauptreaktor liegt vorzugsweise bei 1 ° C bis 80 ° C, insbesondere 5 ° C bis 65 ° C, besonders bevorzugt bei 10 °C bis 50 °C. Die mittlere Verweilzeit im Reaktor beträgt vorzugsweise 60 bis 300 Minuten, insbesondere 90 bis 180 Minuten. Die Reaktion kann unter Umgebungsdruck durchgeführt werden. Die Produktsuspension wird nach der gewünschten Verweilzeit auf einen geeigneten Apparat zur Fest/-Flüssig-Trennung, beispielsweise durch eine Zentrifuge, geleitet, in der der Feststoff von der Reaktionslösung separiert wird.

Die Reaktionslösung, die noch gelöste Edukte enthalten kann, wird vorzugsweise in den Hauptreaktor zurückgeführt. Der Feststoff kann zur Einstellung des pH-Werts mit wäßrigen Alkalien, beispielsweise mit Natriumhydroxid oder Kaliumhydroxid, in einem weiteren Apparat, beispielsweise einem Rührkessel oder einem Feststoffmischer, aufgeschlämmt werden. In einer zweiten, nachgeschalteten Fest/Flüssig-Trennung kann das Produkt zusätzlich gewaschen werden. Die anfallende Lauge wird bei Bedarf erneut zur Einstellung des pH-Werts in den davorliegenden Aufschlämmapparat zurückgeführt werden. Das gewaschene Produkt kann anschließend in einem geeigneten Trockner, beispielsweise Bandtrockner, Tellertrockner, Schaufeltrockner, getrocknet und danach abgefüllt werden.

Ein besonders bevorzugtes Verfahren zur Herstellung von Polyvinylbutyral ist in 6 Phasen aufgeteilt. Das Verfahrensschema ist in der Abbildung 1 dargestellt: Dem Vorreaktor ist ein lonenaustauscher **1** vorgeschaltet, in dem die wäßrige Polyvinylalkohol-Lösung von Kationen befreit wird (Phase A).
Im Vorreaktör, bestehend aus Kessel **2**, Reaktor **3** und Modul **4**, findet der erste Schritt der Umsetzung, die Teilacetalisierung statt (Phase B). Dazu werden gegebenenfalls gekühlter Polyvinylalkohol als wäßrige Lösung (PVA/H₂O) und gegebenenfalls gekühlter Butyraldehyd (BA) kontinuierlich in den Kessel **2** eingespeist und intensiv vermischt. Durch Umpumpen gelangt diese Lösung in der Reaktor **3**, der beispielsweise ein Rohrbündelreaktor oder ein Hohlfasermodulreaktor ist. Danach durchströmt die Lösung die Entwässerung (Modul **4**), die beispielsweise aus einem geeigneten Membranmodul besteht. Nach Erreichen der gewünschten Verweilzeit τ wird das Reaktionsgemisch in den Kessel **5** verbracht (Phase C). Kessel **5** stellt zusammen mit dem Reaktor **6** und dem Modul **7** den Hauptreaktor dar. Der Reaktor **6** und das Modul **7** sind gleich oder ähnlich der Bauelemente des Vorreaktors. Die Reaktion wird analog der Vorreaktorreaktion bis zum gewünschten Acetalisierungsgrad fortgeführt, dazu wird nach Bedarf Butyraldehyd (BA) zugegeben. Nach Erreichen der gewünschten Verweilzeit τ gelangt die Produktsuspension in die Feststoffabtrennung **8** (Phase D). Während die abgetrennte Reaktionslösung wieder in den Kessel **5** zurückgeführt wird, gelangt das Festprodukt in der Kessel **9**, wo durch Zugabe von Lauge und Wasser der pH-Wert eingestellt wird (Phase E). Anschließend wird diese Suspension in die Wäsche und Produktabscheidung **10** verbracht (Phase F). Das gewaschene abfiltrierte Produkt wird nachfolgend im Trockner getrocknet und gelangt von dort zur Verpackung oder direkten Weiterverarbeitung.

Die in den nachfolgenden Beispielen angeführten Teile und Prozente beziehen sich auf das Gewicht, soweit nicht anders vermerkt.

### Beispiele

### Beispiel 1

In einem 2-Liter Becherglas mit Wandkühlung werden Polyvinylalkohol in Form einer 8%igen Lösung von ®Mowiol 28-99 (91,5 g; ca. 2 mol) vollständig entsalztes Wasser und Butyraldehyd (57,48 g, 0,79 Mol) bei 13 °C Innentemperatur vorgelegt. Die Polyvinylalkohollösung wurde zuvor zwecks Entfernen von Kationen über einen lonenaustauscher geschickt. Eine Kationenaustauschermembran vom Typ ®Nafion 117 (lonic form H⁺) wird eingebracht. Der pH-Wert der Lösung beträgt pH 3. Die Membran wurde zuvor ca. 3-5 Stunden in E-Wasser gewässert und dadurch vorgequollen. Nach ca. 15 Minuten trübt sich die Lösung ein und wird milchig. Es bilden sich kleine Flocken und beim Abstellen des Rührers sinken die gebildeten Schwebeteilchen zu Boden. Nach ca. 120 Minuten kann die Reaktion abgestellt und das gebildete Produkt abfiltriert werden. Durch Waschen mit 5%iger Natronlauge wurde der pH-Wert auf ca. 8 eingestellt. Nach kurzem Spülen mit Wasser wird im Trockenschrank bei Temperaturen bis maximal 50 °C getrocknet. Auswaage: 95 g, Trockengehalt 98,73 %. Die Analyse ergibt einen Gehalt von Polyvinylalkohol von 20,82 % (nach DIN 53783/53240).

Die Viskosität der 5%igen ethanolischen Lösung gemessen nach DIN 53015 (Höppler-Kugelfallviskosimeter) beträgt 80 mPa·s.

### Beispiel 2

In einem 2-Liter Becherglas mit Wandkühlung werden Polyvinylalkohol in Form einer 9%igen Lösung von Mowiol 4-98 (124,8 g; ca. 2,8 mol) in vollständig entsalztes Wasser und Butyraldehyd (119,57 g, 1,64 Mol) bei 15 °C Innentemperatur vorgelegt. Die Polyvinylalkohollösung wurde zuvor über einen lonenaustauscher von Kationen befreit. Die Membran vom Typ Nafion 117 (lonic form H⁺)wird eingebracht, der pH-Wert der Lösung beträgt pH 3. Die Membran wurde zuvor ca. 3-5 Stunden in E-Wasser gewässert und dadurch vorgequollen. Nach ca. 15-20 Minuten trübt sich die Lösung ein und wird milchig. Es bilden sich kleine Flocken und beim Abstellen des Rührers sinken diese zu Boden. Nach ca. 120 Minuten ist die Reaktion beendet und das gebildete Produkt kann abfiltriert werden. Durch Waschen mit 5%iger Natronlauge wird der pH-Wert auf ca. 8 eingestellt. Nach kurzem Spülen mit Wasser wird im Trockenschrank bei Temperaturen bis maximal 50 °C getrocknet. Auswaage: 120 g, Trockengehalt 98,53 %. Die Analyse ergibt einen Polyvinylalkohol-Gehalt von 29,3 %, und eine OH-Zahl von 373,8 mg KOH/g (nach DIN 53783/53240 bzw. ISO/DIS 4629). Die Viskosität der 5%igen ethanolischen Lösung gemessen nach DIN 53015 (Höppler-Kugelfallviskosimeter) beträgt 60 mPa·s.

### Beispiel 3

In einem 2-Liter Becherglas mit Wandkühlung werden Polyvinylalkohol in Form einer 10%igen Lösung von Mowiol 8-88 (124,8 g; ca. 2,8 mol) in vollständig entsalztem E-Wasser und Butyraldehyd (119,57 g, 1,64 Mol) bei 15 °C Innentemperatur vorgelegt. Die Polyvinylalkohollösung wurde zuvor zwecks Entfernen von Kationen über eine lonenaustauscher geleitet. Die Membran vom Typ ®Nafion 117 (lonic form H⁺) wird eingebracht, der pH-Wert der Lösung beträgt pH 3. Die Membran wurde zuvor ca. 3-5 Stunden in E-Wasser gewässert und dadurch vorgequollen. Nach ca. 30 Minuten trübt sich die Lösung ein und wird milchig. Es bilden sich kleine Flocken und beim Abstellen des Rührers sinken diese zu Boden. Nach ca. 180 Minuten ist die Reaktion beendet und das gebildete Produkt kann abfiltriert werden. Nach kurzem Spülen mit Wasser wird im Trockenschrank bei Temperaturen bis maximal 50 °C getrocknet. Auswaage: 140 g, Trockengehalt 96,8 %. Die Analyse ergibt einen Polyvinylalkoholgehalt von 15 % (nach DIN 52783/53240). Die Viskosität der 15%igen ethanolischen Lösung gemessen nach DIN 53015 (Höppler-Kugelfallviskosimeter) beträgt 98 mPa·s.

## Patentansprüche

1. Verfahren zur Herstellung von Polyvinylacetalen oder -ketalen durch Umsetzung von Polyvinylalkohol mit einem Aldehyd oder Keton in Gegenwart eines Katalysators, der Säuregruppen enthält, die auf einem im Reaktionsmedium unlöslichen flächigen Träger chemisch gebunden sind, **dadurch gekennzeichnet, dass** als flächiger Träger eine Polymerfolie, eine Kationenaustauschermembran oder ein flächiges Gebilde aus einem anorganischen Material aus der Gruppe der Zeolithe, Bentonite und Gläser eingesetzt wird.

2. Verfahren nach Anspruch 1, **dadurch gekennzeichnet, dass** ein Träger mit Säuregruppen aus der Gruppe Sulfonsäure, Phosphonsäure und Carbonsäure eingesetzt wird.

3. Verfahren nach Anspruch 1, **dadurch gekennzeichnet, dass** als Aldehyd n-Butyraldehyd eingesetzt wird.

4. Verfahren nach Anspruch 1, **dadurch gekennzeichnet, dass** Polyvinylalkohol mit einem Hydrolysegrad von 60 bis 100 Mol-% und einen Polymerisationsgrad von 150 bis 5000 eingesetzt wird.

5. Verfahren nach Anspruch 1, **dadurch gekennzeichnet, dass** die Herstellung des Polyvinylacetals oder -ketals kontinuierlich erfolgt.

6. Verfahren nach Anspruch 1, **dadurch gekennzeichnet, dass** der Polyvinylalkohol und der Aldehyd oder das Keton kontinuierlich in einen Vorreaktor dosiert werden, in Gegenwart des Säuregruppen enthaltenden Trägers teilweise zur Umsetzung gebracht werden, anschließend in einen Hauptreaktor überführt werden und in Gegenwart des Säuregruppen enthaltenden Trägers weiter zur Umsetzung gebracht werden.

7. Verfahren nach Anspruch 6, **dadurch gekennzeichnet, dass** die Umsetzung im Vorreaktor bei einer Temperatur von 1 bis 70°C und einer mittleren Verweilzeit von 10 bis 120 Minuten und im Hauptreaktor bei einer Temperatur von 1 bis 80°C und einer mittleren Verweilzeit von 60 bis 300 Minuten durchgeführt wird.

## Claims

1. Procedure for the manufacture of polyvinylacetals or -ketals by reaction between polyvinyl alcohol and an aldehyde or ketone in the presence of a catalyst, which contains acid groups which are chemically bound on a surface-type carrier which is insoluble in the reaction medium, **characterised in that** the surface-type carrier is a polymer film, a cationic exchange membrane or a flat structure consisting of an inorganic material selected from the group comprising zeolytes, bentonites and glasses.

2. Procedure in accordance with claim 1, **characterised in that** a carrier is used which has acid groups selected from the group comprising sulphonic acid, phosphonic acid, carboxylic acid.

3. Procedure in accordance with claim 1, **characterised in that** n-butyraldehyde is used as the aldehyde.

4. Procedure in accordance with claim 1, **characterised in that** polyvinyl alcohol with a degree of hydrolysis of between 60 and 100 Mol % and a polymerisation degree of 150 to 5,000 is employed.

5. Procedure in accordance with claim 1, **characterised in that** the manufacture of the polyvinylacetal or -ketal takes place on a continuous basis.

6. Procedure in accordance with claim 1, **characterised in that** the polyvinylalcohol and the aldehyde or ketone are continuously metered into a preliminary reactor, where a partial reaction takes place in the presence of the carrier containing the acid groups, after which they are transferred to the main reactor where the complete reaction takes place in the presence of the acid groups.

7. Procedure in accordance with claim 6, **characterised in that** the reaction in the preliminary reactor takes place at a temperature of between 1 and 70 °C and over a mean dwell time of between 10 and 120 minutes and in the main reactor at a temperature of between 1 and 80 °C and over a mean dwell time of 60 to 300 minutes.

## Revendications

1. Procédé de préparation d'acétals et de cétals polyvinyliques par réaction de poly(alcool vinylique) avec un aldéhyde ou une cétone en présence d'un catalyseur, qui contient des radicaux acide, qui sont chimiquement liés à un support plane insoluble dans le milieu réactionnel, **caractérisé en ce que** l'on met en oeuvre en tant que support plane une feuille de polymère, une membrane échangeuse de cations ou un tissu plat en un matériau inorganique du groupe des zéolithes, des bentonites et des verres.

2. Procédé selon la revendication 1, **caractérisé en ce que** l'on met en oeuvre un support comportant des radicaux acide du groupe des acides sulfoniques, des acides phosphoniques et des acides carboxyliques.

3. Procédé selon la revendication 1, **caractérisé en ce que** l'on met en oeuvre en tant qu'aldéhyde du n-butyraldéhyde.

4. Procédé selon la revendication 1, **caractérisé en ce que** l'on met en oeuvre du poly(alcool vinylique) d'un degré d'hydrolyse de 60 à 100% molaires et d'un degré de polymérisation de 150 à 5000.

5. Procédé selon la revendication 1, **caractérisé en ce que** la préparation de l'acétal ou du cétal de polyvinyle est entreprise en continu.

6. Procédé selon la revendication 1, **caractérisé en ce que** le poly(alcool vinylique) et l'aldéhyde ou la cétone sont dosés en continu dans un préréacteur, sont partiellement mis en réaction en présence du support contenant des radicaux acide, sont ensuite transférés dans un réacteur principal et que l'on poursuit la réaction en présence du support contenant des radicaux acide.

7. Procédé selon la revendication 6, **caractérisé en ce que** la réaction dans le préréacteur est entreprise à une température de 1 à 70°C et avec un temps de séjour moyen de 10 à 120 minutes, et est entreprise dans le réacteur principal à une température de 1 à 80°C et avec un temps de séjour moyen de 60 à 300 minutes.
